# EUROPEAN PATENT APPLICATION

(11) **EP 4 568 002 A1**
(43) Date of publication of application: **11.06.2025**
(21) Application number: 23848369.7
(22) Date of filing: 02.08.2023
(51) Int. Cl.: H01M 50/533, H01G 9/08, H01G 11/06, H01G 11/70, H01M 50/103, H01M 50/109, H01M 50/15, H01M 50/153, H01M 50/176, H01M 50/181, H01M 50/202, H01M 50/291, H01M 50/296, H01M 50/50, H01M 50/545, H01M 50/548, H01M 50/559

(54) **ELECTROCHEMICAL ELEMENT**

(30) Priority: 03.08.2022 JP 2022123709
(71) Applicant: Maxell, Ltd., Kyoto 618-8525 (JP)
(72) Inventor: FURUKAWA, Kazuki, Kyoto 618-8525 (JP); YAMAGUCHI, Koji, Kyoto 618-8525 (JP); SATO, Seiji, Kyoto 618-8525 (JP); OTSUKA, Takumi, Kyoto 618-8525 (JP); MASUDA, Shumpei, Kyoto 618-8525 (JP); AOKI, Hiroyoshi, Kyoto 618-8525 (JP)
(74) Representative: Mewburn Ellis LLP
(86) International application number: PCT/JP2023/028322
(87) International publication number: WO 2024/029577

(57) **Abstract**

An electrochemical device is provided capable of maintaining good electrical connection and providing good sealability. An electrochemical device 1 includes: a case 10 including a recessed container 11 having a bottom 111 and a side wall 112, and a cap 12 that covers the opening of the recessed container 11; a power generation element 20 having a laminate with an electrode layer 21, an electrode layer 22 and a solid electrolyte layer 23 laminated together and housed in the interior space of the case 11 such that the bottom 111 and electrode layer 21 face each other; and a conductive plate 30 positioned adjacent to the opening of the recessed container 11 and between the electrode layer 22 and cap 12. The recessed container 11 includes a plurality of supports 115 on the inner peripheral surface of the side wall 112. The conductive plate 30 includes a plurality of supported portions 31 located on its edges and corresponding in position to the supports 115. With each supported portion 31 supported by its associated support 115, the power generation element 20 is pushed by a spring piece 33 of the conductive plate 30 toward the bottom 111 of the recessed container 11.

## Description

### TECHNICAL FIELD

The present disclosure relates to an electrochemical device with a power generation element sealed in a case.

### BACKGROUND ART

Various conventional batteries have been disclosed with a power generation element housed in the interior space defined by a recessed container and a cap that covers the opening of the recessed container.

JP 2012-69508 A (Patent Document 1) discloses an electrochemical cell with stable electrochemical characteristics. The electrochemical cell includes a hermetic container. The hermetic container includes a base member and a lid member. A housing space is formed between these two members for housing an electrochemical element (i.e., electrode assembly). An elastic member is positioned between the lid member and electrochemical element to press the electrochemical element. Patent Document 1 discloses an implementation in which the elastic member is constituted by a plate spring bent in a V-shape as seen in cross-sectional view, a torsion bar unit that utilizes a torsion-derived elastic recovery force, or a diaphragm -shaped spring having the shape of a concave surface that is warped as it goes from the center toward the outer edge.

JP 2010-56067 A (Patent Document 2) discloses a coin-shaped lithium secondary battery including: a battery element having a first electrode, a solid electrolyte and a second electrode; a container having a metallic case, a metallic sealing plate and a gasket positioned therebetween, the battery element being encapsulated in the container; and a conductive elastic body positioned between the battery element and the metallic case or metallic sealing plate. The conductive elastic body is capable of pressing the laminate with a pressure of 0.1 MPa or higher, thereby increasing the contact pressure between the first and second electrodes and the solid electrolyte. This reduces decrease in current density.

### PRIOR ART DOCUMENTS

### PATENT DOCUMENTS

Patent Document 1: JP 2012-69508 A
Patent Document 2: JP 2010-56067 A

### SUMMARY OF THE INVENTION

In implementations of the electrochemical cell of Patent Document 1 where the elastic member presses the electrode assembly while being restricted in position by the lid member, the sealing of the electrochemical cell must involve joining the lid and base members while the lid member is pressing the elastic member. Thus, the lid member receives reaction forces from the elastic member and tends to slope, which may result in a non-uniform joining of the lid and base members. Further, if the elastic member is not fixed to the lid member and/or electrode assembly, the elastic member may be displaced in position during sealing. On the other hand, in implementations where the elastic member (diaphragm-shaped spring) is locked to the seal ring and/or base member and the elastic member is separated from the lid member, its dimension from the center to the outer edge as measured in the height direction (i.e., entire thickness of the spring) is increased, and the locking positions of the spring are at its outer edge, i.e., upper end as determined along the height direction, which creates a large gap between the lid member and electrochemical element, inclusive of the gap between the elastic member and lid member, which may make it difficult to increase the capacity of an electrochemical cell.

In the coin-shaped lithium secondary battery of Patent Document 2, the metallic case must be crimped in such a manner that the conductive elastic body presses the battery element with a predetermined pressing force or higher while applying an appropriate pressing force to the gasket. Especially in implementations where only the central portion of the metallic sealing plate presses the elastic body, it is difficult to apply a uniform pressing force to the entire gasket, and sealability can easily decrease.

In view of this, a problem to be solved by the present disclosure is to provide an electrochemical device capable of maintaining good electrical connection and, at the same time, providing good sealability.

To solve the above-identified problem, the present disclosure provides the following arrangement: An electrochemical device according to the present disclosure includes: a case including a recessed container having a bottom and a side wall, and a cap adapted to cover an opening of the recessed container; a power generation element sealed in the case and including a first electrode layer located adjacent to the bottom, a second electrode layer located adjacent to the cap, and an isolation layer located between the first electrode layer and the second electrode layer; and a conductive plate positioned between the power generation element and the cap. The first electrode layer is electrically connected to a first conductive path running from an interior of the case to an outside of the case. The second electrode layer is electrically connected to a second conductive path running from the interior of the case to the outside of the case via the conductive plate. The conductive plate includes a flat portion facing the power generation element and a spring raised from the flat portion to press the power generation element toward the bottom of the recessed container, the conductive plate being locked on the side wall of the recessed container at a location radially outward of the power generation element as seen in plan view, and a clearance is formed between the conductive plate and the cap.

The electrochemical device according to the present disclosure will maintain good electrical connection and, at the same time, provide good sealability.

### BRIEF DESCRIPTION OF DRAWINGS

[FIG. 1] FIG. 1 is a cross-sectional view of an electrochemical device according to a first embodiment.
[FIG. 2] FIG. 2 is an external perspective view of the recessed container of the electrochemical device of FIG. 1.
[FIG. 3] FIG. 3 is an external perspective view of another recessed container for the electrochemical device.
[FIG. 4] FIG. 4 is a plan view of the electrochemical device of FIG. 1 (excluding the cap and conductive plate).
[FIG. 5] FIG. 5 is a cross-sectional view of the device showing a conductive plate of Variation 1.
[FIG. 6] FIG. 6 is a perspective view of the conductive plate of FIG. 5.
[FIG. 7] FIG. 7 is a plan view of a conductive plate of Variation 2.
[FIG. 8] FIG. 8 is a plan view of a conductive plate of Variation 3.
[FIG. 9] FIG. 9 is a cross-sectional view of the device showing a conductive plate of Variation 4.
[FIG. 10] FIG. 10 is a plan view of a conductive plate of Variation 5.
[FIG. 11] FIG. 11 is a plan view of a conductive plate of Variation 6.
[FIG. 12] FIG. 12 is a plan view of a conductive plate of Variation 7.
[FIG. 13] FIG. 13 is a plan view of a conductive plate of Variation 8.
[FIG. 14] FIG. 14 is a plan view of a conductive plate of Variation 9.
[FIG. 15] FIG. 15 is a cross-sectional view of a conductive plate of Variation 10.
[FIG. 16] FIG. 16 is a plan view of the conductive plate of FIG. 15.
[FIG. 17] FIG. 17 is a cross-sectional view of an electrochemical device according to a second embodiment.
[FIG. 18] FIG. 18 is a cross-sectional view of an electrochemical device according to a third embodiment.
[FIG. 19] FIG. 19 is a cross-sectional view of an electrochemical device according to a fourth embodiment.

### EMBODIMENTS FOR CARRYING OUT THE INVENTION

### (Arrangement 1)

An electrochemical device according to an embodiment of the present disclosure includes: a case including a recessed container having a bottom and a side wall, and a cap adapted to cover an opening of the recessed container; a power generation element sealed in the case and including a first electrode layer located adjacent to the bottom, a second electrode layer located adjacent to the cap, and an isolation layer located between the first electrode layer and the second electrode layer; and a conductive plate positioned between the power generation element and the cap. The first electrode layer is electrically connected to a first conductive path running from an interior of the case to an outside of the case. The second electrode layer is electrically connected to a second conductive path running from the interior of the case to the outside of the case via the conductive plate. The conductive plate includes a flat portion facing the power generation element and a spring raised from the flat portion to press the power generation element toward the bottom of the recessed container, the conductive plate being locked on the side wall of the recessed container at a location radially outward of the power generation element as seen in plan view. A clearance is formed between the conductive plate and the cap.

Thus, the conductive plate is locked and fixed to the side wall of the recessed container at locations radially outward of the power generation element as seen in plan view, and the spring of the conductive plate presses the power generation element toward the bottom of the recessed container, thereby preventing vibrations and other factors from causing a positional displacement of the conductive plate, thus allowing the conductive plate to provide more stable conduction between the power generation element and the first and second conductive paths. Thus, the electrochemical device will maintain good electrical connection. Further, since the conductive plate is not in abutment with the cap, the cap will not be affected by pressing or other actions of the conductive plate during sealing, thus improving the sealability of the case.

### (Arrangement 2)

Starting from the electrochemical device of Arrangement 1, the spring may include a spring piece cantilever-supported by the flat portion to press the power generation element toward the bottom of the recessed container. Thus, providing a spring piece present only in a portion of the flat portion of the conductive plate is sufficient, which facilitates production of the conductive plate, and thus production of the electrochemical device.

### (Arrangement 3)

Starting from the electrochemical device of Arrangement 1, the conductive plate may include a plurality of springs raised from the flat portion to press the power generation element toward the bottom of the recessed container. This increases the total conduction area between the conductive plate and power generation element, thus reducing electrical resistance and also further ensuring electrical connection. Further, it disperses pressed portions of the power generation element and also increases the total pressing force.

### (Arrangement 4)

Starting from the electrochemical device of Arrangement 3, each of the plurality of springs may include a spring piece cantilever-supported by the flat portion to press the power generation element toward the bottom of the recessed container. Thus, a plurality of locations of the flat portion of the conductive plate may be provided with spring pieces, which facilitates production of the conductive plate, and thus production of the electrochemical device.

### (Arrangement 5)

Starting from the electrochemical device of Arrangement 4, the plurality of spring pieces may be disposed in line symmetry as seen in plan view or point symmetry as seen in plan view. Specifically, the plurality of spring pieces may be disposed in at least one of line symmetry or point symmetry as seen in plan view. Thus, the points of contact between extreme ends of the spring pieces and the power generation element are disposed in symmetry, thus evenly distributing the pressing forces of the spring pieces against the power generation element.

### (Arrangement 6)

Starting from the electrochemical device of Arrangement 4, the spring pieces of the plurality of springs may be radially disposed as seen in plan view. Thus, the points of contact between the extreme ends of the spring pieces and the power generation element are disposed in symmetry, thus evenly distributing the pressing forces of the spring pieces against the power generation element.

### (Arrangement 7)

Starting from the electrochemical device of Arrangement 2, the spring piece may be shaped such that a width of a portion cantilever-supported by the flat portion is larger than a width of the extreme end. This mitigates stress concentration on the cantilever-supported portion, thereby preventing damage to the spring piece. Further, in the spring piece, the width of the extreme end, which allows conduction with the second electrode layer, is smaller than the width of the portion that is cantilever-supported by the flat portion, and thus the extreme end portion of the spring piece can easily be bent, thereby easily absorbing variations in the thickness of the power generation element and/or variations in the height of the side wall of the recessed container, for example.

### (Arrangement 8)

Starting from the electrochemical device of Arrangement 2, the spring piece may be shaped such that a width of the extreme end is larger than a width of a portion cantilever-supported by the flat portion. This widens the conduction area between the spring piece and power generation element, thereby reducing electrical resistance.

### (Arrangement 9)

Starting from the electrochemical device of Arrangement 2, the spring piece may be a disk spring. This improves the pressing force of the spring piece against the power generation element even if the thickness of the spring piece is reduced.

### (Arrangement 10)

Starting from the electrochemical device of any one of Arrangements 2 and 4 to 9, an extreme end portion of the spring piece may be bent in a direction away from the power generation element. This prevents a sharp portion of the extreme end of the spring piece from contacting and damaging the power generation element.

### (Arrangement 11)

Starting from the electrochemical device of any one of Arrangements 1 to 10, the power generation element may further include a porous metal layer on a surface of the second electrode layer. Thus, the porous metal layer pressed by the conductive plate is compressed by a certain amount, thereby sufficiently absorbing variations in the thickness of the power generation element or the height of the case, for example, which will reduce variations in internal resistance values. Alternatively, if the porous metal layer is integrated with the second electrode layer in advance, the electrical resistance of the conducting portions between the spring and power generation element will be reduced.

### (Arrangement 12)

An electrochemical device according to another embodiment of the present disclosure includes: a case including a recessed container having a bottom and a side wall, and a cap adapted to cover an opening of the recessed container; a flat element sealed in the case and including an exterior member having a first electrode terminal located adjacent to the bottom and a second electrode terminal located adjacent to the cap, and a power generation element encapsulated in the exterior member and having a first electrode layer, a second electrode layer and an isolation layer located between the first electrode layer and the second electrode layer; and a conductive plate positioned between the flat element and the cap. The first electrode terminal is electrically connected to a first conductive path running from an interior of the case to an outside of the case. The second electrode terminal is electrically connected to a second conductive path running from the interior of the case to the outside of the case via the conductive plate. The conductive plate includes a flat portion facing the flat element and a spring raised from the flat portion to press the flat element toward the bottom of the recessed container, the conductive plate being locked to the side wall of the recessed container at a location radially outward of the flat element as seen in plan view. A clearance is formed between the conductive plate and the cap. This prevents vibrations and other factors from causing a positional displacement of the conductive plate, thus allowing the electrochemical device to maintain good electrical connection. Further, since the conductive plate is not in abutment with the cap, the cap will not be affected by pressing or other actions of the conductive plate during sealing, thus improving the sealability of the case.

### (Arrangement 13)

Starting from the electrochemical device of Arrangement 13, the spring may include a spring piece cantilever-supported by the flat portion to press the flat element toward the bottom of the recessed container. Thus, providing a spring piece present only in a portion of the flat portion of the conductive plate is sufficient, which facilitates production of the conductive plate, and thus production of the electrochemical device.

### (First Embodiment)

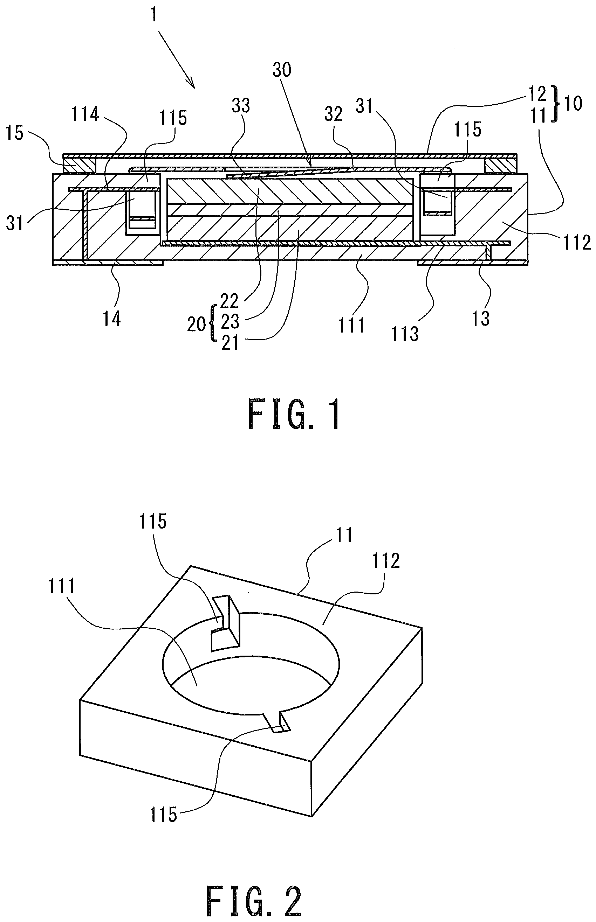

Now, a first embodiment of the present disclosure will be specifically described in connection with an exemplary implementation where the electrochemical device is an all-solid-state battery, with reference to FIGS. 1 to 16. First, as shown in FIG. 1, the electrochemical device 1 includes a case 10, a power generation element 20 and a conductive plate 30 contained in the case 10, and an external terminal 13 and an external terminal 14 positioned on the outer surface of the case 10.

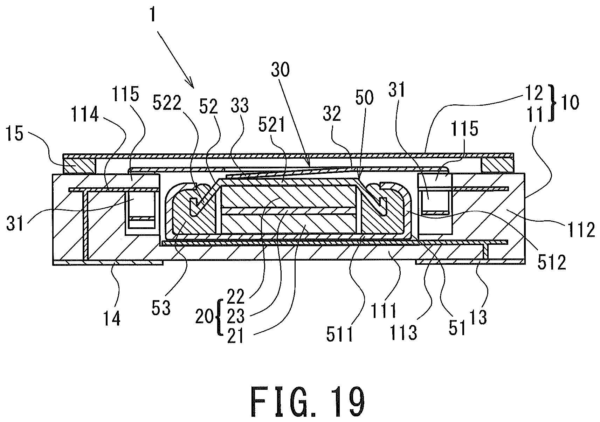

The case 10 includes a recessed container 11 and a cap 12. The recessed container 11 is made of ceramics. The recessed container 11 includes a rectangular bottom 111 and a side wall 112 having the shape of a rectangular tube with a columnar space for housing the power generation element 20, the outer periphery of the bottom 111 and the side wall being continuously formed. As seen in longitudinal cross-sectional view, the side wall 112 extends generally perpendicular to the bottom 111. A conductor 113 is provided inside the bottom 111. The conductor 113 is provided between the power generation element 20 and bottom 111 to extend along them for conductive connection with the power generation element 20, thereby providing a conductive path for the electrode layer 21. A conductor 114 is provided within the side wall 112. As shown in FIG. 1, some portions of the conductor 114 are exposed at the inner peripheral surface of the side wall 112, at the lower surfaces and side surfaces of supports 115, discussed further below, thereby providing a conductive path for the electrode layer 22. A method of manufacturing the recessed container 11 will be described further below. The recessed container 11 is not limited to any particular material, and examples include resin, glass (e.g., borosilicate glass and glass ceramics), metal, ceramics, and various other materials. A composite material with ceramic and/or glass powder dispersed in a resin may also be used. If the recessed container 11 is formed from a metal material, to ensure that the power generation element 20 is insulated from the recessed container 11 or a flat element 50 discussed further below (see FIG. 19) is insulated from the recessed container 11, it is preferable that the inner surface of the bottom 111 of the recessed container 11 and the inner peripheral surface of the side wall 112 are coated with an insulator, such as a resin material or glass. Further, as seen in plan view, the recessed container 11 is not limited to a rectangular shape, and may be circular, elliptic, or polygonal, for example. The recessed container, having an interior space for housing the power generation element 20, is not limited to a cylindrical shape, and may have the shape of a polygonal tube, such as a quadrangular tube, depending on the shape of the power generation element 20. Alternatively, the conductor 114 may be located on the inner surface of the side wall 112, rather than within the side wall 112, and may further extend through within the bottom 111 to be in conduction with the external terminal 14. In such implementations, to prevent the outer peripheral surface of the power generation element 20 and the conductor 114 from contacting each other, it is preferable that an insulating layer is provided between the outer peripheral surface of the power generation element 20 and the conductor 114, such as on the inner surface of the conductor 114.

The side wall 112 includes a plurality of supports 115 that support the conductive plate 30, described further below. According to the present embodiment, the supports 115 are lugs located at the upper end of the inner peripheral surface of the side wall 112 and extending in a circumferential direction of the inner peripheral surface. More specifically, as shown in FIG. 2, the supports 115 are ceilings for a plurality of indentations formed in the inner peripheral surface of the side wall 112 and extending radially outward. Thus, the supports 115 extend in a circumferential direction of the inner peripheral surface. The lower surface of each support 115, that is, the lower surface of each ceiling, is capable of locking and supporting a supported portion 31, discussed further below, on the conductive plate 30 at a location radially outward of the power generation element 20 as seen in plan view. Further, although four supports 115 are provided in the present embodiment, supports are not limited to any number; for example, if two supported portions 31 are provided on the conductive plate 30, two supports 115 may be provided at locations corresponding to the supported portions 31.

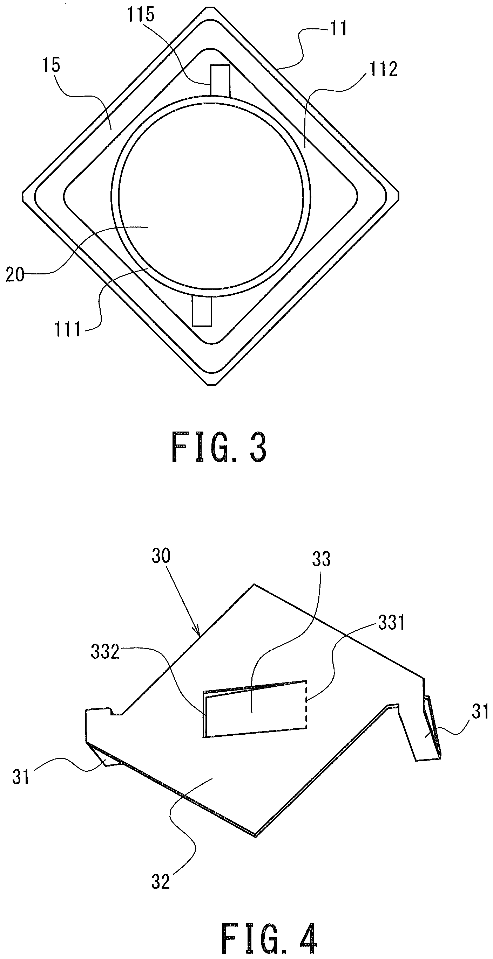

The cap 12 is a rectangular, thin metallic plate covering the opening of the recessed container 11. As shown in FIGS. 1 and 3, the cap 12 is joined (i.e., seam-welded) to the recessed container 11 by a seal ring 15 having the shape of a rectangular frame and positioned between the lower surface of the outer peripheral edge of the cap and the upper end of the recessed container 11. Thus, the interior space of the case 10 is completely hermetic. In view of effects on the power generation element 10, the interior space of the case 10 is preferably a vacuum atmosphere or inert-gas atmosphere, such as nitrogen. The cap 12 is not limited to a metallic thin plate, and is only required to be capable of covering the opening of the recessed container 11. The cap 12 is not limited to a rectangular shape and may be varied depending on the shape of the recessed container 11 as seen in plan view, and may be circular, elliptical or polygonal, for example. Further, the cap 12 may have other shapes than a flat plate. In some implementations, the cap 12 may be bonded to the recessed container 11 with an adhesive, and the joining of the cap 12 to the recessed container 11 is not limited to any particular method; any joining method may be used that can hermetically seal the interior space of the case 10.

The external terminal 13 is located on the outer surface of the bottom 111 of the recessed container 11. The external terminal 13 is electrically connected to the electrode layer 21, discussed further below, via the conductor 113. The electrode layer 21 functions as a cathode layer, as discussed below. Thus, the conductor 113 provides a conductive path that provides conduction between the external terminal 13 and cathode layer, and the external terminal 13 functions as a cathode terminal.

The external terminal 14 is located on the outer surface of the bottom 111 of the recessed container 11, separated from the external terminal 13. The external terminal 14 is electrically connected to the supported portions 31 of the conductive plate 30, discussed further below, via the conductor 114. As discussed further below, the conductive plate 30 is electrically connected to the electrode layer 22 which functions as an anode layer. Thus, the conductor 114 provides a conductive path that provides conduction between the external terminal 14 and anode layer, and the conductive plate 30 provides a connection terminal that provides conduction between this conductive path and electrode layer 22, and thus the external terminal 14 functions as an anode terminal. The external terminals 13 and 14 are not limited to the above-described positioning, and may be positioned on the outer surface of the side wall 112 of the recessed container 11; alternatively, the cap 12 may function as the conductor 114 and the external terminal 14 may be provided on the outer surface of the cap 12. Positioning these two terminals on the outer surface of the bottom 111 of the recessed container 11 so as to be separated by a predetermined distance facilitates mounting on the surface of the circuit board.

A method of manufacturing the recessed container 11 will be described below. First, a metal paste is applied to a ceramic greensheet through printing to form a printed pattern that is to provide the conductors 113 and 114. Next, a plurality of such greensheets with printed patterns are laminated and baked. Laminating a plurality of greensheets with different shapes results in the above-described supports 115. In this way, a recessed container 11 is fabricated that contains conductors 113 and 114 and includes such supports 115 as described above on the inner peripheral surface of the side wall 112. The manufacturing is not limited to this method, and any method may be used that can form supports 115 on the inner peripheral surface of the side wall 112. The external terminals 13 and 14 may be formed by this printed pattern of metal paste.

The power generation element 20 includes a laminate including an electrode layer (cathode layer) 21, an electrode layer (anode layer) 22 and a solid electrolyte layer 23 laminated together. The solid electrolyte layer 23 is positioned between the electrode layers 21 and 22 to provide an isolation layer. In other words, according to the present embodiment, the isolation layer is constituted by the solid electrolyte layer 23. The power generation element 20 is columnar in shape. The power generation element 20 is laminated in such a manner that, from adjacent to the bottom 111 of the recessed container 11 (i.e., from the bottom in the drawing), the electrode layer 21, the solid electrolyte layer 23, and the electrode layer 22 are stacked in this order. In other words, the power generation element 20 is positioned such that one end thereof, i.e., the electrode layer 21, is located adjacent to the bottom 111 of the recessed container 11 and the other end, i.e., the electrode layer 22, is located adjacent to the cap 12, and the element is housed in the interior space of the case 10. The power generation element 20 is not limited to a columnar shape, and may be varied to have the shape of a rectangular parallelepiped or a prism, for example. Further, the power generation element 20 may include a plurality of laminates. The plurality of laminates may be stacked upon one another so as to be connected in series.

The electrode layer 21 is a cathode pellet obtained by forming a cathode mixture into a columnar shape, the cathode mixture containing a cathode active material constituted by lithium cobalt oxide, a sulfide-based solid electrolyte, and a conductive aid constituted by graphene in the ratio of 65:30:5 by mass. The electrode layer 21 is not limited to any particular cathode active material and only required to be able to function as the cathode layer of the power generation element 20, and may be lithium nickel oxide, lithium manganese oxide, lithium-nickel-cobalt-manganese complex oxide, olivine-type complex oxide, for example, or may be a mixture thereof. The other constituent materials and their proportions are not limited to any particular materials/proportions. The size and shape of the electrode layer 21 are not limited to a columnar shape, and may be varied depending on the size and shape of the electrochemical device 1.

The electrode layer 22 is an anode pellet obtained by forming an anode mixture into a columnar shape, the anode mixture containing an anode active material used in a lithium secondary battery constituted by LTO (Li₄Ti₅O₁₂, i.e., lithium titanate), a sulfide-based solid electrolyte, and graphene in the ratio of 50:40:10 by weight. The electrode layer 22 is not limited to any particular anode active material and only required to be able to function as the anode layer of the power generation element 20, and may be a metallic lithium or a lithium alloy, or a carbon material such as graphite or low-crystallinity carbon, or an oxide such as SiO, for example, or may be a mixture thereof. The other constituent materials and their proportions are not limited to any particular materials/proportions. The size and shape of the electrode layer 22 are not limited to a columnar shape, and may be varied depending on the size and shape of the electrochemical device 1.

The solid electrolyte layer (i.e., isolation layer) 23 contains a sulfide-based solid electrolyte. The solid electrolyte layer 23 is columnar in shape. The solid electrolytes contained in the electrode layer 21, electrode layer 22 and solid electrolyte layer 23 are not limited to any particular ones; preferable ones include sulfide-based solid electrolytes, especially argyrodite-type sulfide-based solid electrolytes to provide ion conductivity. If sulfide-based solid electrolytes are used, it is preferable that the surface of the cathode active material is coated with a lithium-ion conductive material such as a niobium oxide to prevent reaction with the cathode active material. The solid electrolytes contained in the solid electrolyte layer 23, electrode layer 21 and electrode layer 22 may be hydride-based solid electrolytes or oxide-based solid electrolytes, for example. The size and shape of the solid electrolyte layer 23 are not limited to a columnar shape, and may be varied depending on the size and shape of the electrochemical device 1.

As shown in FIGS. 1 and 4, the conductive plate 30 is a metallic plate that is rectangular in shape in plan view and placed on the opening of the recessed container 11 of the case 10. The conductive plate 30 includes a plurality of supported portions 31 located radially outward of the power generation element 20 as seen in plan view and corresponding in position to the supports 115 described above. According to the present embodiment, the supported portions 31 are hook-shaped locking pieces locked to the respective supports 115 described above, that is, to the lower surfaces of the respective ceilings. More specifically, each supported portion 31 extends from an edge of the conductive plate 30 toward the associated support 115 described above (i.e., downward in FIG. 1). The supported portion 31 includes a tip portion sharply bent back toward the lower surface of the associated support 115, i.e., the associated ceiling. The tip of the supported portion 31 is in contact with the conductor 114 exposed at the lower surface and side surface of the ceiling, as discussed above. Thus, the conductive plate 30 functions as a current collector and, at the same time, functions as a connection terminal that electrically connects the electrode layer 22 with the conductive path connected to the external terminal 14. The conductive plate 30 is supported by the supports 115 provided on the inner peripheral surface of the recessed container 11 and covers a portion of the opening of the recessed container 11. The surface area of the conductive plate 30 as measured in plan view is smaller than the surface area of the opening of the recessed container 11. It is to be noted that, even if the hook-shaped locking pieces are not locked to the lower surfaces of the respective ceilings, the conductive plate 30 is treated as being locked to the side wall 112 of the recessed container 11 if the hook-shaped locking pieces properly fix the conductive plate 30 while being pressed into indentations formed in the inner peripheral surface of the side wall 112.

As shown in FIG. 1, the conductive plate 30 includes a spring 33 raised from the flat portion 32 of the conductive plate 30 toward the electrode layer 22 of the power generation element 20 so as to contact the upper surface of the other end of the power generation element 20, i.e., the electrode layer 22. The spring 33 is not limited to any particular shape, and is only required to be is capable of pressing the power generation element 20 toward the bottom 111 of the recessed container 11. According to the present embodiment, the spring 33 is a spring piece inclined toward the electrode layer 22 of the power generation element 20 from the flat portion 32 (the spring 33 will be hereinafter sometimes referred to as spring piece 33). As shown in FIG. 4, the spring piece 33 is formed by a rectangular U-shaped notch in the flat portion 32, and is cantilever-supported by the flat portion 32. In other words, according to the present embodiment, the spring piece 33 is a plate spring. Thus, forming a spring piece in a portion of the flat portion 32 is sufficient, which facilitates production of the conductive plate, and thus production of the electrochemical device. Further, forming the spring piece 33 by notching the flat portion 32 further facilitates production of the conductive plate, and thus production of the electrochemical device. The spring piece 33 includes a border 331 with the flat portion 32 and an extreme end 332 that can be brought into contact with the electrode layer 22 of the power generation element 20 to provide conduction with the electrode layer 22. The spring piece 33 is bent at the border 331 and inclined toward the power generation element 20 as it goes from the border 331 toward the extreme end 332. The height from the bottom surface of the flat portion 32 to the extreme end 332 prior to assembly of the electrochemical device 1 (i.e., height of the spring 33) is larger than the height from the bottom surface of the flat portion 32 to the power generation element 20 after assembly of the electrochemical device 1. Thus, the extreme end 332 of the spring piece 33 is capable of pressing the power generation element 20, thereby maintaining good electrical connection between the conductive plate 30 and power generation element 20. Further, as the spring 33 is constituted by a spring piece, the thickness of portions of the conductive plate 30 other than the supported portions 31 can be reduced. For example, prior to assembly of the electrochemical device 1, the thickness of the portions of the conductive plate 30 other than the supported portions 31 may be the sum of the thickness of the plate constituting the flat portion 32 and the height of the spring piece 33. Specifically, the thickness of the plate may be 0.2 mm and the height of the spring piece 33 may be 0.5 mm, the sum of which, i.e., the thickness of the portions of the conductive plate 30 other than the supported portions 31, is 0.7 mm. The spring piece 33 may have a width of 1.5 mm and a length of 3 mm, for example. In implementations where a plurality of spring pieces 33 are provided, each spring piece 33 may have a different shape, including width and length, to prevent resonance or for other reasons. The thickness of the portions of the conductive plate 30 other than the supported portions 31 are preferably not larger than 1.2 mm, more preferably not larger than 1 mm, and particularly preferably not larger than 0.8 mm. On the other hand, to produce a pressing force required of the spring 33, the thickness of the portions of the conductive plate 30 other than the supported portions 31 is preferably not smaller than 0.3 mm, more preferably not smaller than 0.4 mm, and particularly preferably not smaller than 0.5 mm.

Further, the positions of the edges of the conductive plate 30, and thus the supported portions 31, may be freely set along the height direction (i.e., thickness direction of the conductive plate 30), and thus the distance between the cap 12 and the extreme end 332 of the spring piece 33 can be prevented from increasing even if a clearance is formed between the cap 12 and the conductive plate 30. This enables preventing the gap between the cap 12 and power generation element 20 from increasing, thereby increasing the capacity of the electrochemical device 1. The overall thickness of the conductive plate 30, inclusive of the supported portions 31, may be adjusted as appropriate depending on the height of the recessed container 11 from the bottom 111 as measured at the side wall 112. It is sufficient if the supported portions 31 have a height required to be locked to the respective supports 115. In view of this, the overall thickness of the conductive plate 30 inclusive of the supported portions 31 may be, for example, not larger than 3 mm, preferably not larger than 2.7 mm, and more preferably not larger than 2.5 mm. As used herein, "thickness direction" refers to the top-bottom direction in FIG. 1 (i.e., the height direction of the electrochemical device 1), and can also be described as a direction perpendicular to the bottom surface of the flat portion 32 in the drawings. The spring piece 33 may be formed by a notch in the flat portion 32, as discussed above; alternatively, the flat portion 32 may have the shape of a flat surface and a separate spring piece 33 may be attached to the bottom surface of the flat portion through welding, for example (the same applies to variations discussed further below). Alternatively, a base portion, separate from the flat portion 32, may be provided in advance that is to be used for attachment of a spring piece 33, in which case the spring piece 33 is attached to the base portion to together form a spring. In other words, the spring piece 33 may be raised directly from the flat portion 32, or another element, such as a base portion, may be positioned between the spring piece and the flat portion 32 from which the piece is raised. Alternatively, the spring piece 33 may be supported by the flat portion 32 at both ends of the spring piece 33 such that the piece has the shape of a protrusion toward the power generation element 20.

Examples of metals forming the conductive plate 30 include nickel, iron, copper, chromium, cobalt, titanium, aluminum, and alloys thereof; to facilitate functioning as a plate spring, stainless steels for springs are preferably used, such as SUS301-CSP, SUS304-CSP, SUS316-CSP, SUS420J2-CSP, SUS631-CSP and SUS632J1-CSP.

To ensure that the pressing force of the conductive plate 30 against the power generation element 20 is at a predetermined level or higher, the thickness of the plate member of the conductive plate 30 is preferably not smaller than 0.05 mm, more preferably not smaller than 0.07 mm, and particularly preferably not smaller than 0.1 mm. On the other hand, to prevent an excessively large thickness of the conductive plate 30 from requiring increased housing capacity of the case 10 and to facilitate deformation of the conductive plate 30 to facilitate locking to the side wall 112, the thickness of the conductive plate 30 is preferably not larger than 0.5 mm, more preferably not larger than 0.4 mm, and particularly preferably not larger than 0.3 mm.

After the power generation element 20 is placed inside the recessed container 11, the conductive plate 30 is laid on the upper surface of the power generation element 20. With the conductive plate 30 laid on the upper surface of the power generation element 20, the tip of each supported portion 31 is positioned between the upper surface of the power generation element 20 and the associated support 115, i.e., the lower surface of the associated ceiling as determined along the axial direction of the power generation element 20 (i.e., top-bottom direction in FIG. 1). Then, the supported portion 31 of the conductive plate 30 is pushed toward the bottom 111 of the recessed container 11 and, in that state, moved so as to be supported by the support 115. More specifically, the tip of each supported portion 31 is locked to the associated support 115, i.e., the lower surface of the associated ceiling. As the supported portions 31 are pushed downward, the spring piece 33 of the conductive plate 30, in contact with the power generation element 20, is pushed by the electrode layer 22 in a direction away from the electrode layer. The spring piece 33 uses its elastic force to push the power generation element 20 toward the bottom 111 of the recessed container 11. Thus, the conductive plate 30 is in more stable contact with the power generation element 20, thereby maintaining good electrical connection without a positional displacement due to vibration, for example. The spring piece 33 is not limited to any particular one, and is only required to use its elastic force to push the power generation element 20 toward the bottom 111 of the recessed container 11. Further, although the recessed container 11 includes two supports 115, more than two supports 115 may be provided. Supported portions 31 may be provided depending on the number of supports 115. Another method of fixing the edges of the conductive plate 30 (i.e., supported portions 31) to the inner peripheral surface of the side wall 112 of the recessed container 11 may be, for example, bonding the edges of the conductive plate 30 to the inner peripheral surface of the side wall 112 of the recessed container 11.

A clearance is provided between the conductive plate 30 and cap 12. In other words, the conductive plate 30 and cap 12 are not in contact with each other. Thus, when a change in the volume of the power generation element 20 pushes the conductive plate 30 toward the cap 12, the cap 12 is prevented from deforming. Further, the cap 12 and recessed container 11 are welded together with a seal ring 15 provided therebetween, as discussed above. As a clearance is provided between the conductive plate 30 and cap 12, weld heat is prevented from affecting the power generation element 20. Furthermore, since the conductive plate 30 and cap 12 are not in contact with each other, the joining of the cap 12 to the top end surface of the side wall 112 of the recessed container 11 is not affected by a push of the conductive plate 30, thereby further improving the sealability of the case 10.

Now, Variations 1 to 10 of the conductive plate 30 will be described. The same elements as for the conductive plate 30 described above will not be described here and, basically, only the elements that represent differences from the conductive plate 30 described above will be described.

### (Variation 1)

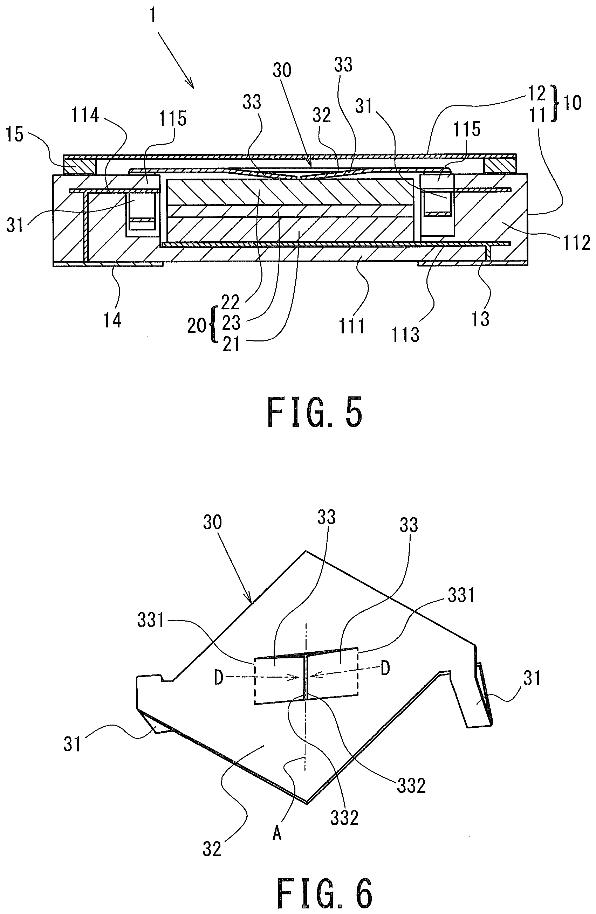

As shown in FIGS. 5 and 6, a conductive plate 30 of Variation 1 includes two spring pieces 33. As shown in FIG. 6, the two spring pieces 33 are disposed in line symmetry as seen in plan view. More specifically, the two spring pieces 33 are shaped to be in line symmetry with respect to a predetermined axis A in the flat portion 32. That is, each of the two spring pieces 33 is inclined toward the electrode layer 22 of the power generation element 20 as it goes from the flat portion 32 toward imagery axial line A, as indicated by the associated direction of inclination D in the drawing. Thus, the extreme ends 332 of the two spring pieces 33 face each other, with axis A in between. In other words, the two spring pieces 33 can be opened in a "double door" configuration. A plurality of such pairs of spring pieces 33 may be arranged in the direction of axis A. For example, in an implementation where five rows are arranged in the direction of axis A, each row having two spring pieces 33 as in Variation 1, then, ten spring pieces 33 are provided. As a plurality of spring pieces 33 are thus provided to be in line symmetry with respect to a predetermined axis A, the total area of contact between the extreme ends 332 of the spring pieces 33 and the electrode layer 22 is increased, thus reducing electrical resistance. Further, as the contact positions between the extreme ends 332 of the spring pieces 33 and the electrode layer 22 are symmetrically disposed, the pressing forces of the spring pieces 33 against the electrode layer 22 are evenly distributed and, at the same time, the total pressing force is increased. Axis A may be positioned in any manner that allows a plurality of spring pieces 33 to be provided and to push the power generation element 20 appropriately.

### (Variation 2)

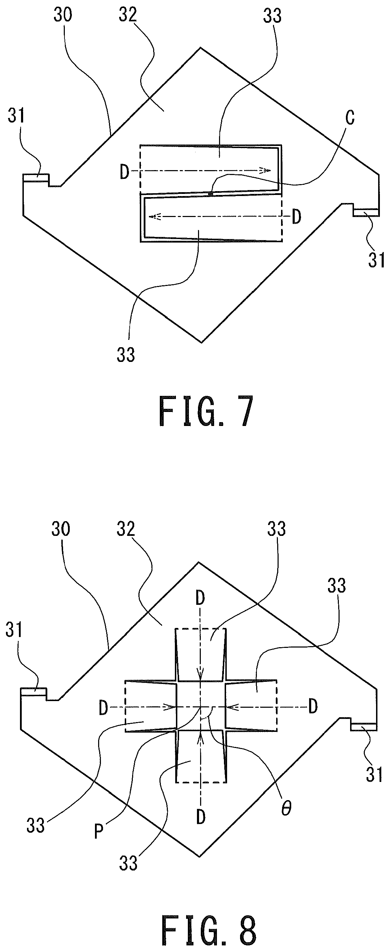

As shown in FIG. 7, a conductive plate 30 of Variation 2 includes two spring pieces 33. The two spring pieces 33 are disposed in point symmetry as seen in plan view. More specifically, the two spring pieces 33 are shaped to be in point symmetry with respect to an imaginary point C in the flat portion 32. As indicated by the directions of inclination D in the drawing, the two spring pieces 33 are arranged such that they have directions of inclination that are parallel to each other as seen in plan view and each of the spring pieces 33 has a direction of inclination D opposite to that of the other spring piece 33 as seen in plan view. The conductive plate 30 of Variation 2 may include two or three or more spring pieces (a plurality of spring pieces) 33. In such implementations, the plurality of spring pieces 33 are arranged such that the directions of inclination D of the spring pieces 33 are parallel to one another as seen in plan view and the directions of inclination of the spring pieces 33 are alternately oriented as seen in plan view. The plurality of spring pieces 33 have the same dimension as measured along their respective directions of inclination D. This increases the total area of contact between the extreme ends 332 of the spring pieces 33 and the electrode layer 22, and the plurality of spring pieces 33 are arranged such that the directions of inclination of the spring pieces 33 are alternately oriented as seen in plan view, thereby reducing electrical resistance. Furthermore, since the contact positions between the extreme ends 332 of the spring pieces 33 and the electrode layer 22 are symmetrically disposed, the pressing forces of the spring pieces 33 against the electrode layer 22 are evenly distributed and, at the same time, the total pressing force is increased. Imaginary point C may be positioned in any manner that allows a plurality of spring pieces 33 to be provided in the flat portion 32 and to push the power generation element 20 appropriately. Preferably, imaginary point C is positioned in a location of the flat portion 32 that corresponds to the geometric center of the power generation element 20.

### (Variation 3)

As shown in FIG. 8, a conductive plate 30 of Variation 3 includes four spring pieces 33. The four spring pieces 33 are formed by a cross-shaped notch in the flat portion 32. Each of the spring pieces 33 is positioned along an imaginary radial line extending from a center point P. Each of the directions of inclination D of the four spring pieces 33 is toward center point P as seen in plan view. That is, as seen in plan view, the line connecting the directions of inclination D of two opposite ones of the four spring pieces 33 crosses the line for the other two pieces. The four spring pieces 33 are each positioned along an imaginary radial line at an equal angle with an adjacent spring piece with respect to center point P. In Variation 3, the angle θ between adjacent spring pieces 33 with respect to center point P is 90°. The border 331 of each spring piece 33 may be a tangent of a circle with its center represented by center point P. The spring pieces 33 may have the same length in their respective directions of inclination D. The conductive plate 30 of Variation 3 is not limited to four spring pieces 33, and may have two, three, five or more spring pieces (a plurality of spring pieces) 33. This reduces electrical resistance and, in addition, evenly distributes the pressing forces of the spring pieces 33 against the electrode layer 22 and also increases the total pressing force.

### (Variation 4)

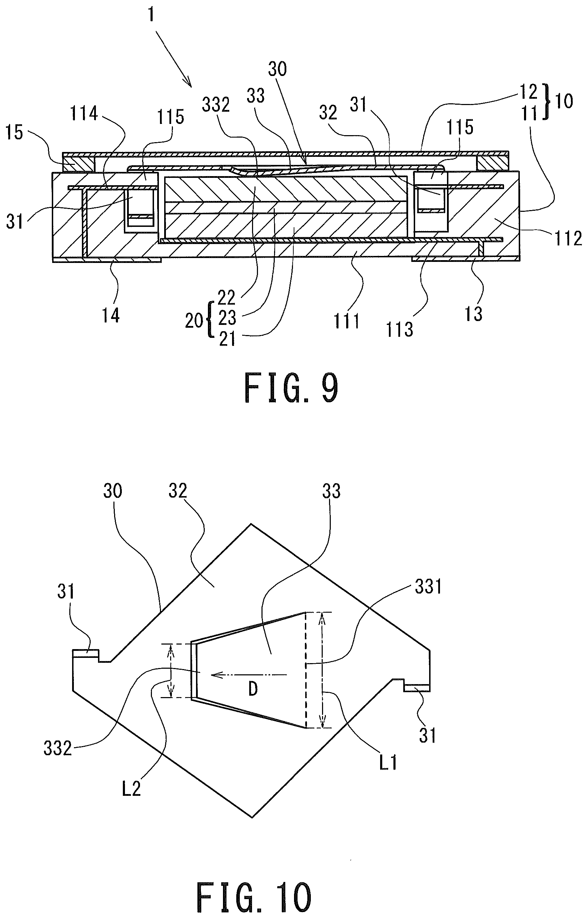

As shown in FIG. 9, a conductive plate 30 of Variation 4 includes a spring piece 33 with an extreme end 332 portion bent in a direction away from the electrode layer 22. Specifically, the extreme end 332 portion has the shape of a protrusion toward the electrode layer 22. The extreme end 332 portion preferably has a curved surface protruding toward the electrode layer 22. In other implementations, the extreme end 332 portion may be multiply bent such that the extreme end 332 portion and the electrode layer 22 are in surface contact. For example, if the extreme end 322 portion is double-bent, the extreme end 332 portion may include a contact surface with the electrode layer 22. This prevents a sharp portion of the extreme end 332 from contacting and damaging the electrode layer 22. The extreme end 332 portion(s) of the spring piece(s) 33 of other variations may be bent in a similar manner.

### (Variation 5)

As shown in FIG. 10, a conductive plate 30 of Variation 5 includes a trapezoidal spring piece 33. Its width L1 at the border 331 is larger than the width L2 at the extreme end 332. The width L1 at the border 331 can also be described as the width at the bend of the spring piece 33 from the flat portion 32, or as the width at its portion cantilever-supported by the flat portion 32. The width L1 at the extreme end 332 can also be described as the width at its portion that contacts the electrode layer 22 of the power generation element 20 (i.e., portion that provides conduction with the electrode layer 22). It is also possible to describe the border 331 as the longer one of the parallel sides of the trapezoidal spring piece 33 and describe the extreme end 332 as the shorter side. Thus, when the spring piece 33 contacts the electrode layer 22, the extreme end 332 portion with a relatively small width can easily be bent in a direction away from the electrode layer 22 and thus easily absorb variations in the thickness of the power generation element 20 or variations in the height of the side wall 112 of the recessed container 11, for example. Further, as the bend, i.e., border 331, is relatively long, stress concentration on the border 331 is mitigated, which prevents damage to the conductive plate 30, for example, prevents the spring piece 33 from being detached from the flat portion 32.

### (Variation 6)

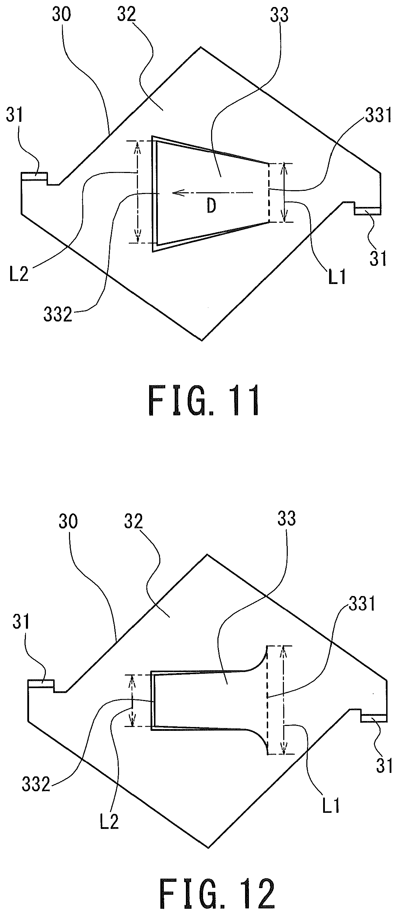

As shown in FIG. 11, a conductive plate 30 of Variation 6 includes an inverted trapezoidal spring piece 33. Its width L2 at the extreme end 332 is larger than the width L1 at the border 331. This increases the contact area between the extreme end 332 of the spring piece 33 and the electrode layer 22, thus reducing electrical resistance and, at the same time, increasing the pressing force of the spring piece 33 against the electrode layer 22. If, in the spring pieces 33 of Variations 5 and 6 discussed above, the extreme end 332 portion is bent in a manner similar to that for the spring piece 33 of Variation 4, or if the extreme end 332 portion is warped upon contact with the electrode layer 22, the spring piece 33 contacts the electrode layer 22 at a location closer to the border 331 than the extreme end. In such implementations, the width of the spring piece 33 at the portion where the piece contacts the electrode layer 22, i.e., at the portion that provides conduction between the spring piece 33 and electrode layer 22, is treated as the width L2 at the extreme end 332.

### (Variation 7)

As shown in FIG. 12, a conductive plate 30 of Variation 7 is includes a notch that has curves near the border 331 as seen in plan view. In other words, the width L1 at the border 331 is larger than the width L2 at the extreme end 332. This produces the same effects produced by the spring piece 3 of Variation 5.

### (Variation 8)

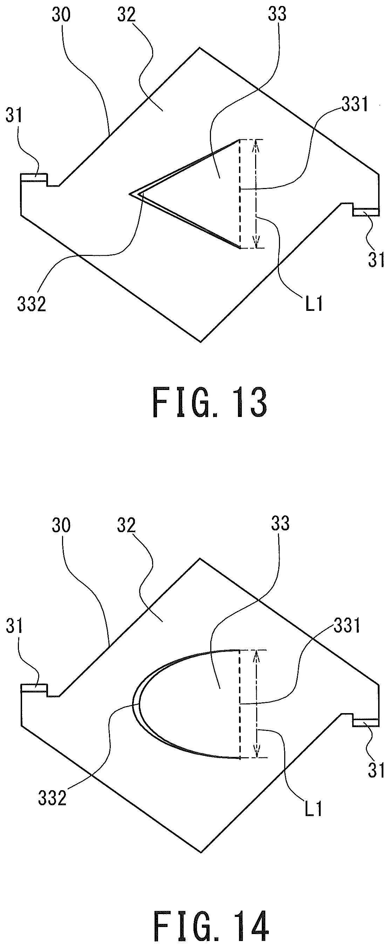

As shown in FIG. 13, a conductive plate 30 of Variation 8 includes a triangular spring piece 33. The border 331 is a predetermined side of the triangular spring piece 33, and the extreme end 332 is represented by an apex of the triangular spring piece 32. In other words, the triangular spring piece 33 is tapered toward the extreme end 332 from the border 331. Although the extreme end 332 is an apex, in reality the piece at its extreme end has a predetermined width L2 (not shown) for connection with the electrode layer 22. Thus, in the spring piece 33 of Variation 8, too, the width L1 at the border 331 is considered to be larger than the width L2 at the extreme end 332. Thus, it produces the same effects produced by the spring piece 33 of Variation 5.

### (Variation 9)

As shown in FIG. 14, a conductive plate 30 of Variation 9 includes a semi-elliptical spring piece 33. The semi-elliptical spring piece 33 is formed by a U-shaped notch in the flat portion 32. The semi-elliptical spring piece 33 is tapered toward the extreme end 332 from the border 331. Although the extreme end 332 has the shape of a curve as seen in plan view, in reality the piece at the extreme end has a predetermined width L2 (not shown) for contact with the electrode layer 22. Thus, in the spring piece 33 of Variation 9, too, the width L1 at the border 331 is considered to be larger than the width L2 at the extreme end 332. Thus, it produces the same effects produced by the spring piece 33 of Variation 5.

### (Variation 10)

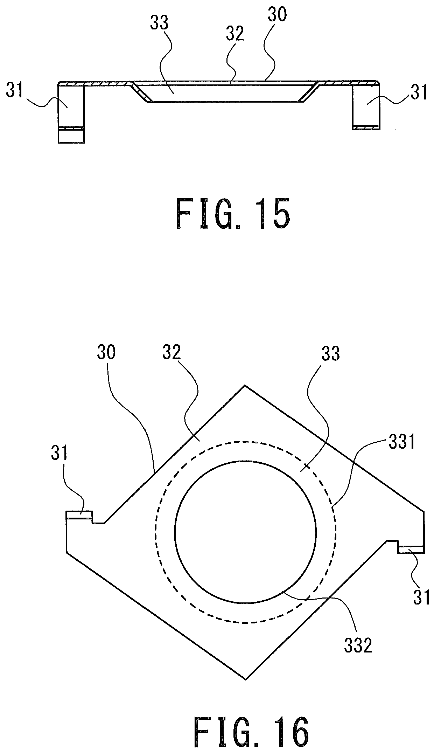

As shown in FIGS. 15 and 16, a spring piece 33 in Variation 10 is a disk spring, provided by the peripheral wall of a truncated cone that gradually decreases in diameter going from the flat portion 32 toward the power generation element 20. In other words, the diameter of the border 331 is larger than the diameter of the extreme end 332, and the circumference of the border 331 is larger than the circumference of the extreme end 332. Thus, it produces the same effects produced by the spring piece 33 of Variation 5.

Various combinations of some or all of the spring piece 33 of the first embodiment and the spring pieces 33 of Variations 1 to 10 may be provided to the conductive plate 30.

### (Second Embodiment)

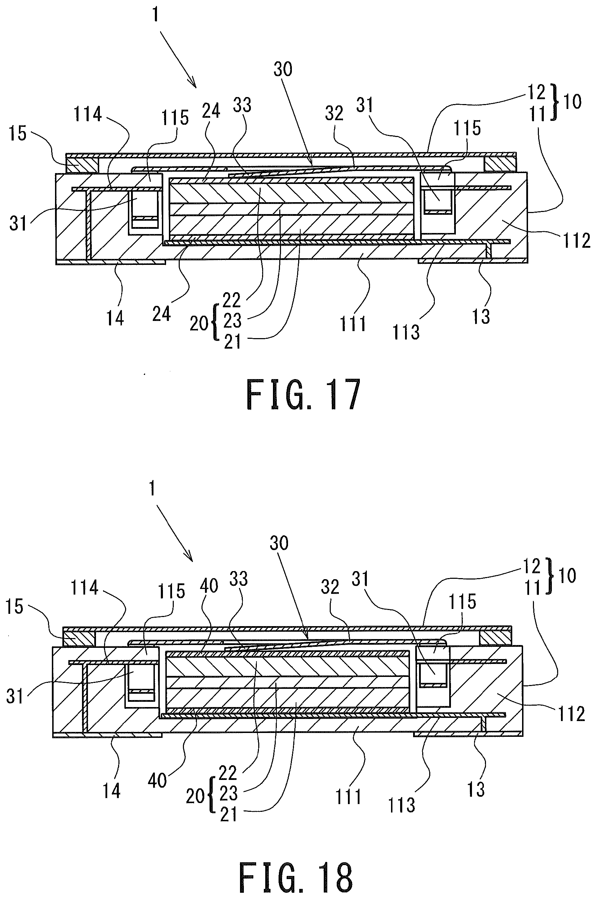

Next, an electrochemical device 1 of a second embodiment will be specifically described with reference to FIG. 17. In connection with the electrochemical device 1 of the present embodiment, the same elements as for the electrochemical device 1 of the first embodiment will basically not be described and only the elements that represent differences from the electrochemical device 1 of the first embodiment will be described.

In the electrochemical device 1 of the present embodiment, the power generation element 20 includes a porous metal layer 24. The porous metal layer 24 is located on the surface of the electrode layer 22, and contacts the extreme end 332 of the spring piece 33 to provide conduction between the electrode layer 22 and conductive plate 30.

The porous metal layer 24, similar to a foamed metal porous body, is a porous metal substrate with high porosity and with empty holes extending through from one side to the other and can be compressed when pressed to function as a current collector. The porous metal layer 24 coats the surface of the electrode layer 22. To reduce electrical resistance, the porous metal layer 24 is preferably not just in contact with the electrode layer 22 but has some portions embedded in the anode mixture of the electrode layer 22 to be integrated with the electrode layer 22. As shown in FIG. 17, a porous metal layer 24 may be provided on the lower surface of the electrode layer 22, that is, on the surface of the electrode layer 21 adjacent to the bottom 111, where the porous metal layer 24 may be provided such that some portions thereof are embedded in the cathode mixture of the extend layer 21 to be integrated with the electrode layer 21.

To facilitate correction of compression-induced variations in the thickness of the power generation element 20, the porosity of the porous metal layer 24 is preferably not lower than 80 %, and more preferably not lower than 90 %. On the other hand, to ensure good conductivity, the porosity of the porous metal layer 24 is preferably not higher than 99 %. The thickness of the porous metal layer 24 prior to assembly of the electrochemical device 1 is preferably not smaller than 0.1 mm, more preferably not smaller than 0.3 mm, and particularly preferably not smaller than 0.5 mm; it is preferably not larger than 3 mm, more preferably not larger than 2 mm, and particularly preferably not larger than 1.5 mm.

Such a porous metal layer 24 sufficiently absorbs variations in the thickness of the power generation element 20 or in the height of the case 10, for example, and, as a result, reduces variations in internal resistance values. In other implementations where the porous metal layer 24 is integrated with the second electrode layer in advance, electrical resistance is reduced at the conducting positions between the spring 33 and power generation element 20.

### (Third Embodiment)

Next, an electrochemical device 1 of a second embodiment will be specifically described with reference to FIG. 18. In connection with the electrochemical device 1 of the present embodiment, the same elements as for the electrochemical device 1 of the first embodiment will basically not be described and only the elements that represent differences from the electrochemical device 1 of the first embodiment will be described.

The electrochemical device 1 of the present embodiment includes a conductive sheet 40 between the electrode layer 22 and conductive plate 30. In the present embodiment, the conductive sheet 40 is a conductive carbon sheet formed from expanded graphite, that is, a graphite sheet. The graphite sheet is produced in the following manner: First, natural graphite is acidized to produce acidized graphite, and its particles are heated. This causes acids present between the layers of the acidized graphite to vaporize to cause the acidized graphite to foam and thus expand. This expanded graphite is formed into a felt shape, and then rolled in a rolling mill with rollers to form a sheet. A circular portion is cut out of this sheet of expanded graphite to produce a conductive sheet 40. As discussed above, expanded graphite is formed by acids in acidized graphite vaporizing such that the acidized graphite foams. Thus, the resulting graphite sheet is porous. As such, the graphite sheet provides not only conductivity, a feature provided by the graphite itself, but also flexibility, a feature not provided by conventional graphite products. The manufacture of the graphite sheet is not limited to this method and the graphite sheet may be formed from materials other than expanded graphite, and may be produced by any method.

The apparent density of the graphite sheet is preferably not lower than 0.3 g/cm³, and more preferably not lower than 0.7 g/cm³; it is preferably not higher than 1.5 g/cm³, and more preferably not higher than 1.3 g/cm³. This is in view of the fact that if the apparent density of the graphite sheet is too low, the graphite sheet can easily be damaged; if the apparent density is too high, flexibility decreases. These ranges of apparent density are not only applicable to a graphite sheet, but also a conductive sheet 40 formed from other materials such as conductive tape.

The thickness of the graphite sheet is preferably not smaller than 0.05 mm, and more preferably not smaller than 0.07 mm; it is preferably not larger than 0.5 mm, and more preferably not larger than 0.2 mm. This is in view of the fact that if the thickness of the graphite sheet is too small, the graphite sheet can easily be damaged; if the thickness is too large, the graphite sheet narrows the interior space of the case 10 that houses the power generation element 20, necessitating a decrease in the capacity (i.e., thickness) of the power generation element 20 that can be housed.

Such a conductive sheet 40 that is more flexible, i.e., more deformable, than the conductive plate allows the pressing force of the spring piece 33 of the conductive plate 30 described above to be conveyed to the power generation element 20 more uniformly, thus preventing damage to the power generation element 20 and also stabilizing electrical connection. As shown in FIG. 6, a conductive sheet 40 may be located between the electrode layer 21 and the bottom 111 of the recessed container 11. This further prevents damage to the power generation element 20 and stabilizes electrical connection.

### (Fourth Embodiment)

Next, an electrochemical device 1 of a third embodiment will be specifically described with reference to FIG. 19. In connection with the electrochemical device 1 of the present embodiment, the same elements as for the electrochemical devices 1 of the first and second embodiments will basically not be described and only the elements that represent differences from the electrochemical devices 1 of the first and second embodiments will be described.

The electrochemical device 1 of the present embodiment includes a flat element 50 contained in the interior space of the case 10. As shown in FIG. 7, the flat element 50 includes an exterior can (electrode terminal) 51, a seal can (electrode terminal) 52, such a power generation element 20 as described above, and a gasket 53.

The exterior can 51 includes a circular flat portion 511, and a cylindrical wall 512 that has the shape of a circular cylinder, the cylindrical wall and the outer periphery of the flat portion 511 being continuously formed. The cylindrical side wall 512 extends generally perpendicularly to the flat portion 511 as seen in longitudinal cross-sectional view. The exterior can 51 is formed from a metal material, such as stainless steel. The exterior can 51 is positioned adjacent to the bottom 111 of the recessed container 11.

The seal can 52 includes a circular flat portion 521, and a peripheral wall 522 having the shape of a circular cylinder, the peripheral wall and the other periphery of the flat portion 521 being continuously formed. The opening of the seal can 52 faces the opening of the exterior can 51. The seal can 52 is formed from a metal material, such as stainless steel. The seal can 52 is positioned adjacent to the cap 12. The power generation element 20 is housed between the exterior can 51 and seal can 52. Thus, the exterior can 51 functions as an electrode terminal to be connected to the conductor 113, while the seal can 52 functions as another electrode terminal to be connected to the conductive plate 30.

After the power generation element 20 is placed inside the interior space of the exterior can 51 and seal can 52, the exterior can 51 is crimped onto the seal can 52, with a gasket 53 positioned between the cylindrical side wall 512 of the exterior can and the peripheral wall 522 of the seal can. More specifically, the exterior can 51 and seal can 52 are positioned such that their openings face each other, the peripheral wall 522 of the seal can 52 is inserted inside the cylindrical side wall 512 of the exterior 51 and, with a gasket 53 positioned between the cylindrical side wall 512 and the peripheral wall 522, the exterior can 51 is crimped onto the seal can 52. Thus, the interior space formed by the exterior can 51 and seal can 52 is hermetically sealed. That is, the exterior can 51 and seal can 52 are exterior members that define an interior space in which the power generation element 20 is encapsulated. Each of the exterior can 51 and seal can 52 is not limited to a circular shape as seen in plan view, and may be varied to be elliptical or polygonal in shape, for example.

The gasket 53 is formed from a resin material such as a polyamide-based resin, a polypropylene resin or a polyphenylenesufide resin. The method of hermetically sealing the interior space defined by the exterior can 51 and seal can 52 is not limited to crimping with a gasket 53 in between, and other methods may be used. For example, the cylindrical side wall 512 of the exterior can 51 and the peripheral wall 522 of the seal can 52 may be joined with a thermofusible resin or an adhesive provided therebetween, and thus sealed.

After the flat element 50 is placed inside the recessed container 11, the conductive plate 30 is laid on the top surface of the flat element 50, and the supported portions 31 are locked to the supports 115 to be supported. At this moment, the spring piece 33 of the conductive plate 30, in contact with the flat surface 521 of the seal can 52, is warped in a direction away from the flat element 50. The spring piece 33 uses its elastic force to press the flat element 50 toward the bottom 111 of the recessed container 11. This allows the conductive plate 30 to be in more stable contact with the flat element 50 without a positional displacement due to vibration, for example, and, similarly to the electrochemical device 1 of the first embodiment described above, maintains good electrical connection without a positional displacement due to vibration, for example.

Although not shown, in the electrochemical device 1 of the present embodiment, too, such a porous metal layer 24 or conductive sheet 40 as discussed above may be provided between the flat element 50 and conductive plate 30. Further, a porous metal layer 24 or a conductive sheet 40 may be provided between the flat element 50 and the bottom 111 of the recessed container 11.

The flat element 50 is not limited to an all-solid-state battery including a solid electrolyte layer, and may be a non-aqueous electrolyte battery such as lithium-ion secondary battery, or any other flat battery, or may be a capacitor such as a lithium-ion capacitor.

In the above-illustrated first to fourth embodiments, the electrode layer 21 functions as a cathode layer while the electrode layer 22 functions as an anode layer; alternatively, the electrode layer 21 may function as an anode layer while the electrode layer 22 may function as an anode layer. In such implementations, the external terminal 13 functions as an anode terminal while the external terminal 14 functions as a cathode terminal.

In the above-illustrated fourth embodiment, the flat element 50 is housed in the interior space of the case 10 such that the exterior can 51 is located adjacent to the bottom 111 of the recessed container 11; alternatively, the flat element may be housed such that the seal can 52 is located adjacent to the bottom 111 of the recessed container 11. In other words, the flat element 50 may be housed in the interior space of the case 10 in such a manner that the flat element 50 shown in FIG. 6 has been flipped over.

In the above-illustrated first to fourth embodiments, the power generation element 20 is constituted by a laminate having an electrode layer 21, electrode layer 22 and solid electrolyte layer 23 laminated together; alternatively, the solid electrolyte layer 23 may be replaced by a separator (not shown) to provide an isolation layer, and an electrolytic solution, together with the power generation element 20, may be contained in the interior space of the case 10 such that the electrochemical device is implemented as a lithium-ion secondary battery, lithium-ion capacitor, or electric double-layer capacitor, for example. In such implementations, the separator and electrolytic solution may be ones typically used in lithium-ion secondary batteries, lithium-ion capacitors, or electric double-layer capacitors, for example. Further, the electrode layers 21 and 22 may be replaced by cathode and anode mixture layers typically used in various electrochemical devices 1.

The present invention will contribute to achieving some of the Sustainable Development Goals (SDGs) set by the United Nations: Goal 7 (affordable and clean energy); and Goal 12 (ensure sustainable consumption and production patterns).

### EXAMPLES

### [Evaluation of Vibration Resistance]

A conductive plate made of SUS304-CSP with a thickness of 0.2 mm was used in fabricating an electrochemical device (i.e., all-solid-state battery) shown in FIG. 9. Vibration testing was conducted on the electrochemical device of this example to evaluate vibration resistance in the following manner.

The testing was conducted by applying sine-wave vibrations to the electrochemical device of the example in three directions, namely, the length, width and height directions of the device in this order. A sweep with a sine wave was a logarithm sweep with varying frequency in a reciprocal manner in the range of 7 Hz to 200 Hz, where one cycle lasted 15 minutes, and such a sweep was repeated 12 times for each of the three directions. Sweeping was done such that peak acceleration was maintained at 1 G in the range of 7 Hz to 18 Hz; from 18 Hz onward, sweeping was done up to a frequency in which peak acceleration reached 8G (approximately 50 Hz) while maintaining the total amplitude at 0.8 mm; then, up to 200 Hz, sweeping was done such that peak acceleration was maintained at 1G.

The AC impedance of the electrochemical device of the example after the vibration testing was measured at 1kHz with an applied voltage of 10 mV, and compared with the AC impedance measured before the vibration testing; no change was observed, demonstrating that good electrical connection was maintained by the conductive plate locked to the side wall of the recessed container.

### [Evaluation of Sealability]

Separately from the vibration testing, the sealability of the case of the electrochemical device of the example was determined by the "Method for Helium Leak Testing" in JIS-Z2331 (bombing method). The electrochemical device was placed inside a tank and pressurized with helium gas for two hours, the electrochemical device was placed in a vacuum chamber and evacuation was performed around the device for one minute, and the amount of leaked helium gas was determined; the amount of leak after 10 minutes was not greater than 1×10⁻¹⁰Pa·m³/s, demonstrating good sealability.

Although embodiments have been described, the present disclosure is not limited to the above-illustrated embodiments, and various modifications are possible without departing from the spirit of the disclosure.

### REFERENCE SIGNS LIST

1: electrochemical device
10: case
11: recessed container
12: cap
13: external terminal
14: external terminal
15: seal ring
111: bottom
112: side wall
113: conductor
114: conductor
115: supports
20: power generation element
30: conductive plate
31: supported portions
32: flat portion
33: spring piece
331: border
332: extreme end
40: conductive sheet
50: flat element
51: exterior can
511: flat portion
52: seal can
521: flat portion
53: gasket
A: axis
C: imaginary point
P: center point

## Claims

1. An electrochemical device comprising:
a case including a recessed container having a bottom and a side wall, and a cap adapted to cover an opening of the recessed container;
a power generation element sealed in the case and including a first electrode layer located adjacent to the bottom, a second electrode layer located adjacent to the cap, and an isolation layer located between the first electrode layer and the second electrode layer; and
a conductive plate positioned between the power generation element and the cap,
wherein:
the first electrode layer is electrically connected to a first conductive path running from an interior of the case to an outside of the case;
the second electrode layer is electrically connected to a second conductive path running from the interior of the case to the outside of the case via the conductive plate;
the conductive plate includes a flat portion facing the power generation element and a spring raised from the flat portion to press the power generation element toward the bottom of the recessed container, the conductive plate being locked to the side wall of the recessed container at a location radially outward of the power generation element as seen in plan view; and
a clearance is formed between the conductive plate and the cap.

2. The electrochemical device according to claim 1, wherein the spring includes a spring piece cantilever-supported by the flat portion to press the power generation element toward the bottom of the recessed container.

3. The electrochemical device according to claim 1, wherein the conductive plate includes a plurality of springs raised from the flat portion to press the power generation element toward the bottom of the recessed container.

4. The electrochemical device according to claim 3, wherein each of the plurality of springs includes a spring piece cantilever-supported by the flat portion to press the power generation element toward the bottom of the recessed container.

5. The electrochemical device according to claim 4, wherein the spring pieces of the plurality of springs are disposed in line symmetry or point symmetry as seen in plan view.

6. The electrochemical device according to claim 4, wherein the spring pieces of the plurality of springs are radially disposed as seen in plan view.

7. The electrochemical device according to claim 2, wherein the spring piece is shaped such that a width of a portion cantilever-supported by the flat portion is larger than a width of the extreme end.

8. The electrochemical device according to claim 2, wherein the spring piece is shaped such that a width of the extreme end is larger than a width of a portion cantilever-supported by the flat portion.

9. The electrochemical device according to claim 2, wherein the spring piece is a disk spring.

10. The electrochemical device according to claim 2, wherein an extreme end portion of the spring piece is bent in a direction away from the power generation element.

11. The electrochemical device according to any one of claims 1 to 10, wherein the power generation element further includes a porous metal layer on a surface of the second electrode layer.

12. An electrochemical device comprising:
a case including a recessed container having a bottom and a side wall, and a cap adapted to cover an opening of the recessed container;
a flat element sealed in the case and including an exterior member having a first electrode terminal located adjacent to the bottom and a second electrode terminal located adjacent to the cap, and a power generation element encapsulated in the exterior member and having a first electrode layer, a second electrode layer and an isolation layer located between the first electrode layer and the second electrode layer; and
a conductive plate positioned between the flat element and the cap,
wherein:
the first electrode terminal is electrically connected to a first conductive path running from an interior of the case to an outside of the case;
the second electrode terminal is electrically connected to a second conductive path running from the interior of the case to the outside of the case via the conductive plate;
the conductive plate includes a flat portion facing the flat element and a spring raised from the flat portion to press the flat element toward the bottom of the recessed container, the conductive plate being locked to the side wall of the recessed container at a location radially outward of the flat element as seen in plan view; and
a clearance is formed between the conductive plate and the cap.

13. The electrochemical device according to claim 12, wherein the spring includes a spring piece cantilever-supported by the flat portion to press the flat element toward the bottom of the recessed container.
